# EUROPEAN PATENT APPLICATION

(11) **EP 2 353 693 A1**
(43) Date of publication of application: **10.08.2011**
(21) Application number: 09830517.0
(22) Date of filing: 04.09.2009
(51) Int. Cl.: B01D 35/14

(54) **DEVICE FOR PREVENTING LEAKAGE FROM WATER PURIFIER**

(30) Priority: 02.12.2008 KR 20080015980 U
(71) Applicant: Picogram Co., Ltd., Kyunggi-do 421-809 (KR)
(72) Inventor: HUR, Ju Song, Incheon 402-836 (KR); BANG, Seok Bong, Incheon 402-040 (KR); GONG, Jong Ho, Seoul 152-829 (KR)
(74) Representative: Weitzel, Wolfgang
(86) International application number: PCT/KR2009/005009
(87) International publication number: WO 2010/064779

(57) **Abstract**

Disclosed is a device which prevents leakage by automatically shutting off flow of incoming tap water using a plunger as a check valve when a compressed pulp body expands due to fluid leaking from a water purifier or under a sink. The water leakage prevention device according to one embodiment of the present invention is installed in the flow path of running tap water to a water purifier, and comprises: a running water inlet connected to the water supply source; a running water outlet connected to the water purifier; an upper casing unit having a channel connecting the running water inlet to the running water outlet; a lower casing unit attached to the bottom of the upper casing unit and having a compressed body which expands with absorption of water leaking from the water purifier via the lower casing unit; and a plunger check valve which alternatively opens and closes the running water channel and prevents discharge of water through the running water outlet by closing said channel when absorption of leakage expands said compressed body.

## Description

### Technical Field

The present invention relates to a device for preventing leakage from a water purifier, which can detect leakage of fluid such as running water from a water purifier or an under-sink and automatically close a running water path.

More particularly, the present invention relates to a device for preventing leakage from a water purifier, which can prevent leakage of fluid by automatically intercepting running water that flows into a water purifier and so on by an interlocking plunger for a check valve if the volume of a compressed pulp body is expanded by fluid that leaks from the water purifier or under-sink.

### Background Art

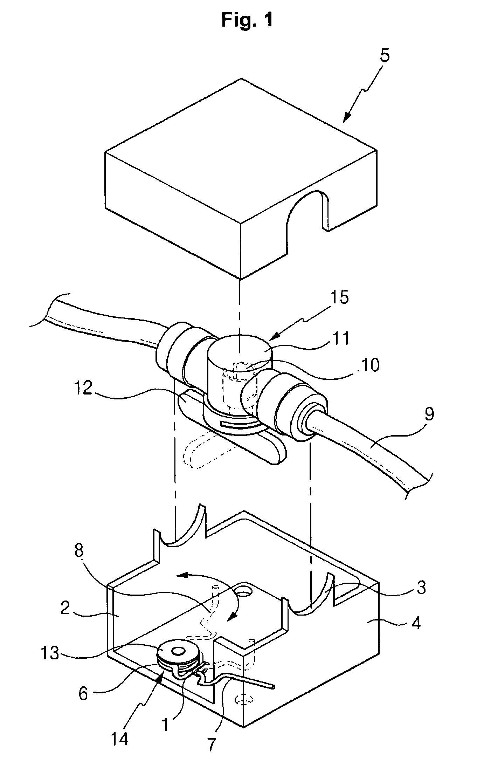

As illustrated in FIG. 1, a device for preventing leakage from a water purifier in the related art includes a box-shaped body 4 having an opening 2 that is formed by cutting a portion of a side wall of the body 4 to expose a paper string 1 provided in the body 4 and engagement grooves 3 formed on both side walls of the body, and a cover 5 detachably engaged with the body 4; a coil spring 14 including a coil spring type elastic portion 6 fixed to an inner bottom surface of the body 4 by a fixing cap 13, a fixed piece 7 formed to extend from the elastic portion 6 and fixed to the4 body4, and a movable piece 8 formed to extend from the elastic portion 6 to move when the paper string 1 is disengaged; and a ball valve 15 including a valve body 11 having a built-in valve ball 10 for opening and closing a flow path of a hose 9 engaged in the engagement grooves 3, and a lever 12 mounted on the bottom surface to interlock with the valve ball 10 to open or close the flow path by rotating the valve ball 10 when the lever 12 is rotated.

With the above-described construction, if water leaks from a water purifier that is installed in a kitchen or the like, the paper string 1, which is wet with the leaking water flowing into the body 4 through the opening 2, is cut off. In this case, the movable piece 8 is spread out against the fixing piece 7 by an elastic restoring force of the coil spring 14 to rotate the lever 12 by about 90° (indicated by an imaginary line in the drawing). By the rotation of the lever 12, the valve ball 10 interlocking with the lever 12 can block the flow path of the hose 9.

However, the device for preventing leakage in the related art has the problem that if the paper string 1, which is wet with the water leaking from the water purifier and flowing into the body 4, is not timely cut off, the device for preventing leakage does not operate normally. Due to this, the amount of leaking water that leaks from the water purifier to the kitchen is increased, and thus the expensive floor or wallpaper may be damaged to cause an economic loss.

Also, if the paper string 1 breaks due to the elastic restoring force of the coil spring 14 in a state where no water leakage occurs, the device for preventing leakage may malfunction.

When the paper string 1 is disengaged, the movable piece 8 rotates the lever 12 by the elastic restoring force of the coil spring 14 to close the ball valve 15. In this case, if the moving radius of the movable piece 8 and the rotating radius of the lever 12 do not accurately coincide with each other, the device for preventing leakage may malfunction to cause the reliability and safety of the device for preventing leakage to deteriorate.

### Disclosure

### Technical Problem

Therefore, the present invention has been made in view of the above-mentioned problems.

An embodiment of the present invention is related to a device for preventing leakage from a water purifier, which can prevent leakage of fluid by automatically intercepting running water that flows into a water purifier and so on by an interlocking plunger for a check valve if the volume of a compressed pulp body is expanded due to the fluid that leaks from the water purifier or under-sink, and thus can prevent the damage of a floor or wallpaper and the occurrence of fire due to the water leakage.

An embodiment of the present invention is related to a device for preventing leakage from a water purifier, which does not require any separate sensing device for sensing the water leakage from a water purifier or any separate power source for intercepting running water that flow into the water purifier.

An embodiment of the present invention is related to a device for preventing leakage from a water purifier, which can repeatedly be used only by replacing a compressed pulp body after the device for preventing leakage is once used.

An embodiment of the present invention is related to a device for preventing leakage from a water purifier, which is free from trouble or malfunctioning, and thus can secure the reliability and safety.

### Technical Solution

In one embodiment of the present invention, there is provided a device for preventing leakage from a water purifier that is installed in a flow path for supplying running water from a running water supply source to the water purifier, which includes an upper casing unit including a running water inlet that communicates with the running water supply source, a running water outlet that communicates with the water purifier, and a running water channel that makes the running water inlet and the running water outlet communicate with each other; a lower casing unit fixed to a bottom surface of the upper casing unit and having a built-in compressed body of which the volume is expanded when the compressed body absorbs leakage water that leaks from the water purifier and flows into the lower casing unit through the bottom of the upper casing unit; and a plunger for a check valve movably engaged with the running water channel so as to open or close the running water channel, and intercepting the running water that is discharged through the running water output port by closing the running water channel when the volume of the compressed body is expanded due to absorption of the leakage water.

In a preferred embodiment of the present invention, as the compressed body, any one of a compressed pulp body, sponge paper, non-woven fabric, and rayon may be used.

The compressed body may have a projection formed on a bottom surface thereof and exposed from a bottom surface of the lower casing unit so as to minimize an absorption time of the leakage water that is in contact with the compressed body.

The device for preventing leakage according to an embodiment of the present invention may further include a support plate fixed to a lower end of the plunger for the check valve to push up the plunger when the compressed body is expanded.

The device for preventing leakage according to an embodiment of the present invention may further include an elastic member elastically supporting the plunger for the check value in a direction opposite to a direction in which the running water channel is closed.

The device for preventing leakage according to an embodiment of the present invention may further include a magnetic body fixed to the bottom surface of the lower casing unit so that the lower casing unit can be detachably fixed to the bottom plate of a structure on which the water purifier is installed.

The device for preventing leakage according to an embodiment of the present invention may further include a both-side tape fixed to the bottom surface of the lower casing unit so that the lower casing unit can be detachably fixed to the bottom plate of a structure on which the water purifier is installed.

The device for preventing leakage according to an embodiment of the present invention may further include a screw fixed to the bottom surface of the lower casing unit so that the lower casing unit can be detachably fixed to the bottom plate of a structure on which the water purifier is installed.

In a preferred embodiment of the present invention, at least one of the upper casing unit and the lower casing unit is formed of a transparent material.

### Advantageous Effects

As described above, the device for preventing leakage from a water purifier according to an embodiment of the present invention has the following advantages.

Further leakage of fluid is prevented by automatically intercepting the running water that flows into the water purifier by the interlocking plunger for the check valve if the volume of a compressed pulp body is expanded due to the fluid that leaks from the water purifier or under-sink, and thus a secondary loss that occurs due to the water leakage (e.g. the damage of a floor (the wooden floor may be twisted due to the water percolation to the floor) or the occurrence of fire) can be prevented.

Also, since any separate sensing device for sensing the water leakage from a water purifier or any separate power source for intercepting running water that flows into the water purifier are not required, the manufacturing cost can be reduced, and the handling and installation of the device can be easily performed to provide convenience to a user.

Also, since the device for preventing leakage can be repeatedly used only by replacing a compressed pulp body after the device for preventing leakage is once used, the cost for the repair and maintenance can be reduced.

Also, since the device for preventing leakage is free from trouble or malfunctioning, the reliability and safety can be improved.

### Brief Description of the Drawings

The foregoing and other objects, features and advantages of the present invention will become more apparent from the following detailed description when taken in conjunction with the accompanying drawings in which:
FIG. 1 is a schematic view of a device for preventing leakage from a water purifier in the related art;
FIG. 2 is a bottom view of a device for preventing leakage from a water purifier according to an embodiment of the present invention;
FIG. 3 is a section view taken along line A-A as illustrated in FIG. 2;
FIG. 4 is a section view taken along line B-B as illustrated in FIG. 2;
FIG. 5 is a section view taken along line C-C as illustrated in FIG. 2;
FIG. 6 is a section view explaining the closing of a running water channel in the device for preventing leakage from a water purifier according to an embodiment of the present invention;
FIG. 7 is a view explaining the installation of the device for preventing leakage in a sink for a water purifier according to an embodiment of the present invention; and
FIG. 8 is a view explaining the installation of a water purifier on which the device for preventing leakage according to an embodiment of the present invention is mounted on a sink.

### Best Mode

Reference will now be made in detail to the preferred embodiments of the present invention. It is to be understood that the following examples are illustrative only and the present invention is not limited thereto.

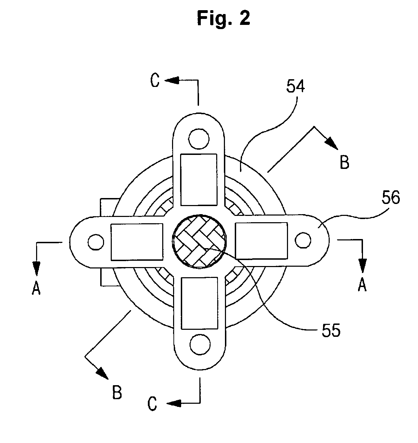

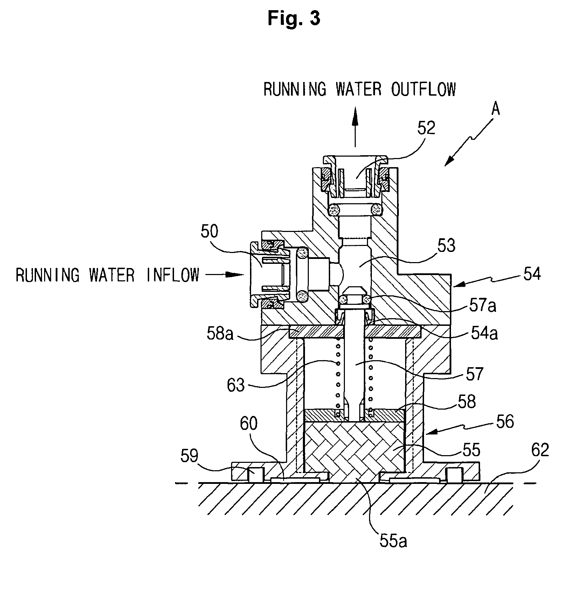

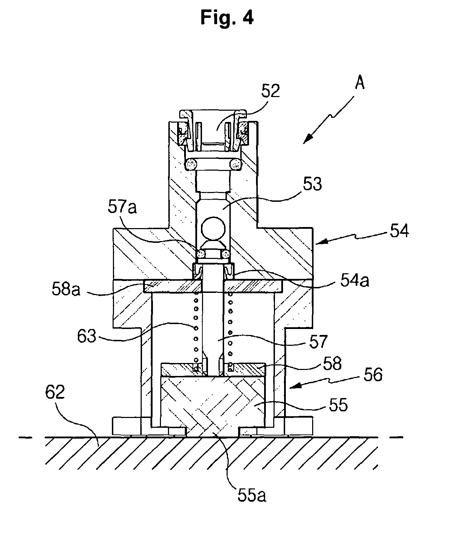

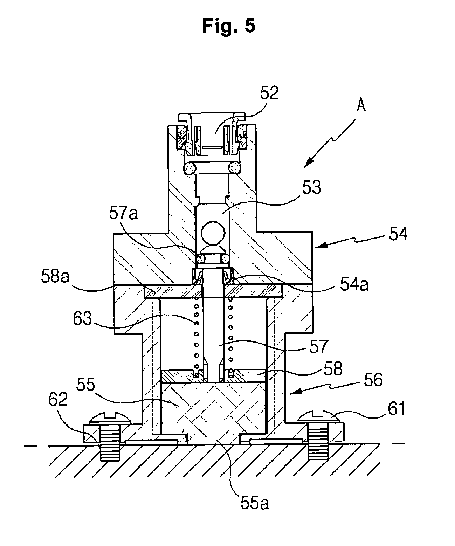

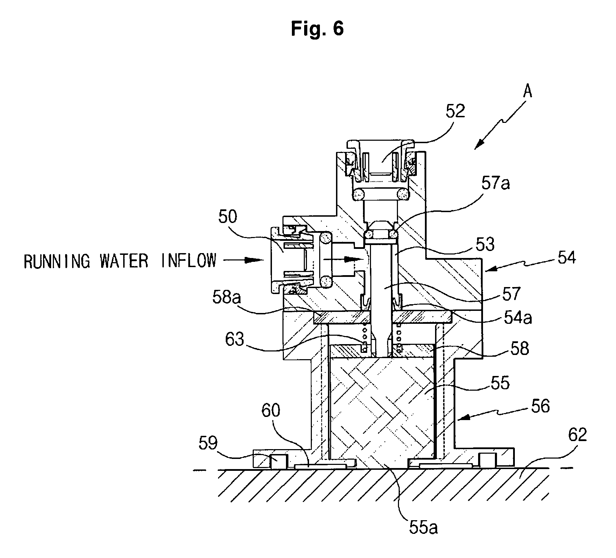

As illustrated in FIGS. 2 to 8, a device for preventing leakage A for a water purifier, which is installed in a flow path for supplying running water from a running water supply source to the water purifier, includes an upper casing unit 54 including a running water inlet 50 that communicates with the running water (e.g. piped water, underground water, or the like) supply source, a running water outlet 52 that communicates with the water purifier 51, and a running water channel 53 that makes the running water inlet 50 and the running water outlet 52 communicate with each other; a lower casing unit 56 fixed to a bottom surface of the upper casing unit 54 and having a built-in compressed body 55 (e.g. compressed pulp body) of which the volume is expanded when the compressed body 55 absorbs leakage water that leaks from the water purifier 51 and flows into the lower casing unit 56 through the bottom of the upper casing unit 54; a plunger 57 for a check valve movably engaged with the running water channel 53 so as to open or close the running water channel 53, and intercepting the running water that is discharged through the running water output port 52 by closing the running water channel 53 when the volume of the compressed body 55 is expanded due to absorption of the leakage water; and an elastic member 63 (e.g. compressed coil spring) supporting the plunger 57 of the check value in direction opposite to a direction in which the running water channel 53 is closed.

The compressed body 55 is expanded about ten times when it absorbs water, and one of a sponge paper (also called a paper sponge), non-woven fabric, and rayon is used as the compressed body 55.

The device for preventing leakage according to an embodiment of the present invention further includes a support plate 58 fixed to a lower end of the plunger 57 for the check valve to push up the plunger 57 when the compressed body 55 is expanded.

The device for preventing leakage according to an embodiment of the present invention further includes a magnetic body 59 fixed to the bottom surface of the lower casing unit 56 so that the lower casing unit 56 can be detachably fixed to the bottom plate 62 (in the case of a metal material) of a structure (e.g. a sink for an under-sink) on which the water purifier 51 is installed.

The device for preventing leakage according to an embodiment of the present invention further includes a both-side tape 60 fixed to the bottom surface of the lower casing unit 56 so that the lower casing unit 56 can be detachably fixed to the bottom plate 62 of the structure (e.g. a sink for an under-sink) on which the water purifier 51 is installed.

The device for preventing leakage according to an embodiment of the present invention further includes a screw 61 fixed to the bottom surface of the lower casing unit 56 so that the lower casing unit 56 can be detachably fixed to the bottom plate 62 of a structure (e.g. a sink for an under-sink) on which the water purifier 51 is installed.

The compressed body 55 has a projection 55a formed on a bottom surface thereof and exposed from a bottom surface of the lower casing unit 56 so as to minimize an absorption time of the leakage water that is in contact with the compressed body 55.

At least one of the upper casing unit 54 and the lower casing unit 56 is formed of a transparent material (e.g. ABS material, PC material, or the like).

Hereinafter, use examples of the device for preventing leakage from a water purifier according to an embodiment of the present invention will be described in detail with reference to the accompanying drawing.
1) The supply of running water from a running water supply source to the water purifier 51 through the device for preventing leakage A will be described.

As illustrated in FIGS. 2, 3, and 7, if the water purifier 51 is installed in a kitchen sink in an apartment, a house, or an officetel, the running water from the running water supply source is directly supplied to a tap 70, and a part of the running water from the running water supply source is supplied to the water purifier 51 through the device for preventing leakage A.

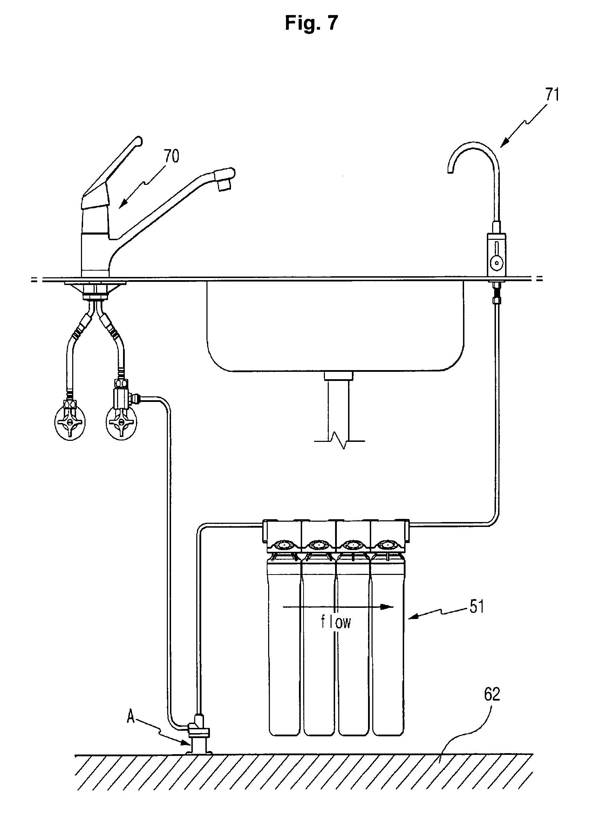

The running water supplied to the water purifier 51 passes through water-purifying filters (e.g. four water-purifying filters), which are connected in series, in order (the flow direction is indicated by an arrow in FIG. 7), and then is supplied to a water dispenser 71.

The running water from the running water supply source flows into the running water channel 53 of the upper casing unit 54 through the running water inlet 50, and then is transferred to the water purifier 51 through the running water outlet 52. In this case, the support plate 58 is kept in its initial state in which the support plate 58 is pressed in a downward direction, as shown in the drawing, by an elastic force of the elastic member 63 installed between the support plates 58 and 58a, and thus the plunger 57 for the check valve, of which the lower end is fixed to the support plate 58, is pulled to the compressed body side 55. Accordingly, the initial state in which the running water channel 53 is open can be maintained.

On the other hand, the running water flowing into the running water channel 53 is sealed by a packing 54a mounted on the upper casing unit 54, and thus the running water leakage to the lower casing unit side 56 is prevented. Also, the running water or the purified water does not leak from the water purifier 51, and thus the running water or the purified water is not supplied to the compressed body side 55 through the bottom surface of the lower casing unit 56. Accordingly, the compressed body 55 does not absorb the water and is kept in the initial dry state.
2) The interception of the running water supplied from the running water supply source to the water purifier 51 through the device for preventing leakage A will be described.

As illustrated in FIGS. 2, 6, and 7, the running water from the running water supply source is directly supplied to the tap 70, and a part of the running water from the running water supply source is supplied to the water purifier 51 for an under-sink through the device for preventing leakage A.

If the water leaks from the water purifier 51, the leakage water collects on the bottom plate 62. At this time, the compressed body 55 absorbs the leakage water flowing into the lower casing unit 56 through the bottom surface of the lower casing unit 56 that is spaced apart from the bottom plate 62 of the sink, and thus is expanded.

At this time, the support plate 58 that is fixed to the lower end of the plunger 57 for the check valve ascends in the lower casing unit 56 along the expanded compressed body 55 (at this time, the elastic member 63 receives the compression force). Due the ascending of the support plate 58, the plunger 57 for the check valve is pushed upward as shown in the drawing.

In this case, by the sealing of an O-ring 57a mounted at an upper end of the plunger 57 for the check valve, the running water channel 53 is closed. That is, the flow of the running water, which flows from the running water supply source to the upper casing unit 54 through the running water inlet 50 and is transferred to the running water outlet side 52 is intercepted.

Accordingly, since the flow of the running water to the water purifier 51 is intercepted, further leakage of fluid (the running water or purified water) from the water purifier is prevented.

As described above, if the water leakage from the water purifier 51 occurs, the running water supplied to the water purifier 51 is intercepted, and thus a user can check the water leakage state from the water purifier 51 and take appropriate measures.

In this case, since the lower casing unit 56 is detachably fixed to the bottom plate 62 by the screw 61, the magnetic body 59, the both-side tape 60, and the like, a user can replace the water-absorbing compressed body 55 in the lower casing unit 56 with a new compressed body. Accordingly, the device for preventing leakage from the water purifier can be repeatedly reused.

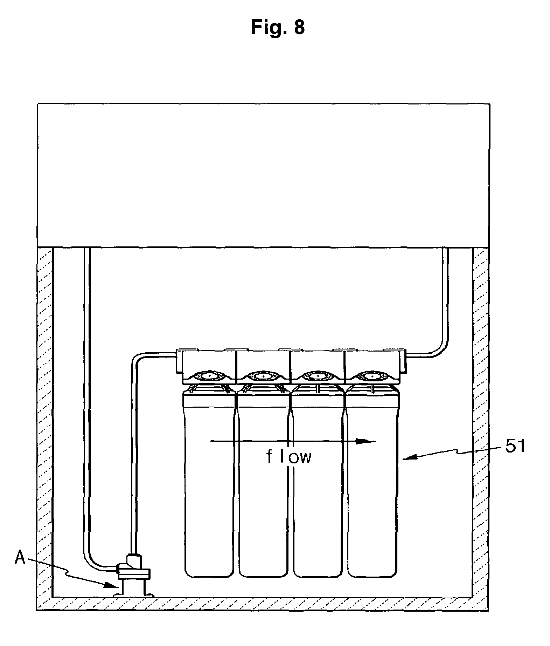

As illustrated in FIG. 8, the device for preventing leakage from the water purifier according to an embodiment of the present invention can be installed in an upstream-side pipeline of the water purifier that is installed so that a user can drink the purified water that is obtained by purifying the running water from the row water supply source through the water-purifying filters (e.g. four water-purifying filters) in the water purifier.

In this case, since the technical feature of intercepting the running water supply to the water purifier side 51 by closing the running water channel 53 by the plunger 57 for the check valve that operates as the compressed body 55 absorbs the leakage water flowing into the lower casing unit 56 and is expanded is substantially the same as that as illustrated in FIG. 7, the detailed description thereof will be omitted.

As described above, according to the device for preventing leakage from the water purifier according to an embodiment of the present invention, further leakage of fluid is prevented by automatically intercepting the running water that flows into the water purifier by the interlocking plunger for the check valve if the volume of the compressed pulp body is expanded due to the fluid that leaks from the water purifier and so on. The device for preventing leakage can be repeatedly used only by replacing the compressed pulp body after the device for preventing leakage is once used. Since the device for preventing leakage is free from trouble or malfunctioning, the reliability and safety can be improved.

### Industrial Applicability

As described above, the device for preventing leakage from a water purifier according to an embodiment of the present invention has the following advantages.

Further leakage of fluid is prevented by automatically intercepting the running water that flows into the water purifier by the interlocking plunger for the check valve if the volume of a compressed pulp body is expanded due to the fluid that leaks from the water purifier or under-sink, and thus a secondary loss that occurs due to the water leakage (e.g. the damage of a floor (the wooden floor may be twisted due to the water percolation to the floor) or the occurrence of fire) can be prevented.

Also, since any separate sensing device for sensing the water leakage from a water purifier or any separate power source for intercepting running water that flows into the water purifier are not required, the manufacturing cost can be reduced, and the handling and installation of the device can be easily performed to provide convenience to a user.

Also, since the device for preventing leakage can be repeatedly used only by replacing a compressed pulp body after the device for preventing leakage is once used, the cost for the repair and maintenance can be reduced.

Also, since the device for preventing leakage is free from trouble or malfunctioning, the reliability and safety can be improved.

While this invention has been described in connection with what is presently considered to be the most practical and preferred embodiments, it is to be understood that the invention is not limited to the disclosed embodiment and the drawings. On the contrary, it is intended to cover various modifications and variations within the spirit and scope of the appended claims.

### LEGEND IN DRAWINGS

**FIG. 1** **(Related Art)**
**FIG. 2**
**FIG. 3**
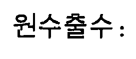 RUNNING WATER OUTFLOW
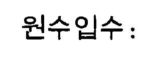 RUNNING WATER INFLOW
**FIG. 4**
**FIG. 5**
**FIG. 6**
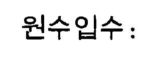 RUNNING WATER INFLOW
**FIG. 7**
**FIG. 8**

## Claims

1. A device for preventing leakage from a water purifier that is installed in a flow path for supplying running water from a running water supply source to the water purifier, comprising:
an upper casing unit including a running water inlet that communicates with the running water supply source, a running water outlet that communicates with the water purifier, and a running water channel that makes the running water inlet and the running water outlet communicate with each other;
a lower casing unit fixed to a bottom surface of the upper casing unit and having a built-in compressed body of which the volume is expanded when the compressed body absorbs leakage water that leaks from the water purifier and flows into the lower casing unit through the bottom of the upper casing unit; and
a plunger for a check valve movably engaged with the running water channel so as to open or close the running water channel, and intercepting the running water that is discharged through the running water output port by closing the running water channel when the volume of the compressed body is expanded due to absorption of the leakage water.

2. The device for preventing leakage according to claim 1, wherein any one of a compressed pulp body, sponge paper, non-woven fabric, and rayon is used as the compressed body.

3. The device for preventing leakage according to claim 2, wherein the compressed body has a projection formed on a bottom surface thereof and exposed from a bottom surface of the lower casing unit so as to minimize an absorption time of the leakage water that is in contact with the compressed body.

4. The device for preventing leakage according to claim 3, further comprising a support plate fixed to a lower end of the plunger for the check valve to push up the plunger when the compressed body is expanded.

5. The device for preventing leakage according to claim 4, further comprising an elastic member elastically supporting the plunger for the check value in a direction opposite to a direction in which the running water channel is closed.

6. The device for preventing leakage according to claim 5, further comprising a magnetic body fixed to the bottom surface of the lower casing unit so that the lower casing unit can be detachably fixed to the bottom plate of a structure on which the water purifier is installed.

7. The device for preventing leakage according to claim 5, further comprising a both-side tape fixed to the bottom surface of the lower casing unit so that the lower casing unit can be detachably fixed to the bottom plate of a structure on which the water purifier is installed.

8. The device for preventing leakage according to claim 5, further comprising a screw fixed to the bottom surface of the lower casing unit so that the lower casing unit can be detachably fixed to the bottom plate of a structure on which the water purifier is installed.

9. The device for preventing leakage according to any one of claims 1 to 8, wherein at least one of the upper casing unit and the lower casing unit is formed of a transparent material.
